# FASCICULE DE BREVET EUROPEEN

(11) **EP 3 073 834 B1**
(45) Date de publication et mention de la délivrance du brevet: **15.01.2020**
(21) Numéro de dépôt: 14812649.3
(22) Date de dépôt: 24.11.2014
(51) Int. Cl.: A23G 3/34, A23G 3/48

(54) **PRODUIT ALIMENTAIRE SUCRE A BASE DE FRUIT SEC**
ZUCKERHALTIGES LEBENSMITTELPRODUKT AUF TROCKENFRUCHTBASIS
SWEET FOOD PRODUCT MADE OF DRIED FRUIT

(30) Priorité: 25.11.2013 EP 13306606
(43) Date de publication de la demande: 05.10.2016
(73) Titulaire: Sonafi, 78220 Viroflay (FR)
(72) Inventeur: MENEGOZ, Mathias, F-26800 Etoile sur Rhône (FR); CHARVE, Sébastien, F-26120 Chabeuil (FR)
(74) Mandataire: Gevers & Orès
(86) Numéro de dépôt international: PCT/IB2014/066294
(87) Numéro de publication internationale: WO 2015/075697

(56) Documents cités:
- EP-A1- 0 513 462
- EP-A1- 1 405 567
- EP-A1- 2 599 390
- WO-A1-2007/116429
- FR-A1- 2 722 952
- GB-A- 963 764
- US-A- 3 115 412
- US-A1- 2009 304 867

## Description

La présente invention se rapporte au domaine de l'industrie alimentaire et plus particulièrement à celui de la confiserie. Elle vise plus spécifiquement un nouveau produit alimentaire à base de fruits secs ayant des propriétés organoleptiques et rhéologiques particulières.

Son objectif est de proposer un nouveau produit alimentaire qui pourrait, d'un point de vue technique, se substituer au chocolat et permettrait ainsi de décliner des gammes de confiserie avec des goûts différents de celui du chocolat. La Demanderesse s'est plus particulièrement intéressée à la mise au point d'un produit alimentaire à base de fruits secs qui aurait les propriétés physiques, en particulier rhéologiques, du chocolat.

On désigne par fruits secs aussi bien les fruits séchés que les graines et les fruits secs incluant notamment les fruits à coque.

GB 963764 décrit des poudres à base de noix ou graines et leur utilisation pour la préparation de crèmes ou de pâtes.

US 3115412 décrit une émulsion à base de noix et la méthode de préparation.

EP2599390 décrit un chocolat enrichi en fibres consistant en un chocolat fourré d'une composition de garniture comprenant 0.1-1% en poids de glucoside du stevia, 1-60% en poids matière grasse, telle que beurre de cacao ou une huile végétale, 0.1-10% en poids de fibres (inuline) et 0.1-20% en poids d'un polyol, de préférence, le glycérol ou un fructo-oligosaccharide.

EP1405567 décrit un procédé de fabrication de pâte de nougat.

WO2007116429 décrit un procédé pour la préparation d'un produit alimentaire, le produit contient: 10-90% farine ou pâte de graines ou noix, 20-60% acides gras et/ou glycérides, 5-90% sucre, 1-3% lécithine, 2-30% beurre, 0.5-3% gomme arabique et 0.5-3% maltodextrine.

US2009304867 décrit une formulation de chocolats aromatisés avec de la poudre naturelle de fruits frais séchés; ces chocolats sont composés de moins de 3% en poids de poudre de cacao dégraissée et séchée, entre 24 et 50% en poids de matière grasse; entre 1 et 20% en poids de poudre de fruit.

Il existe divers produits alimentaires sucrés comprenant des fruits secs, on peut notamment citer les pâtes à tartiner mélangeant poudre (et/ou fève) de cacao et noisettes, le gianduja, le praliné qui est un mélange de sucre et de fruits secs (à hauteur de 50% minimum) ou encore de fourrage praliné (produit constitué de praliné tel que défini ci-dessus, et d'autres ingrédients) ; ces produits ne répondent toutefois pas aux exigences de la Demanderesse pour différentes raisons : leur goût n'est pas uniquement celui du fruit sec, en outre, leur texture, trop molle ou trop friable, ne permet les applications envisagées par la Demanderesse.

Dans le cas présent, la texture recherchée est celle du chocolat au lait ou du chocolat noir, c'est-à-dire un produit solide et croquant à température ambiante mais qui devient fluide lorsqu'il est chauffé, ce qui permet, entre autres, de l'utiliser pour l'enrobage de confiseries, pour la préparation de confiseries moulées ou encore pour des applications de type pâtisserie (crémeux, ganache, mousse...).

La Demanderesse a rencontré diverses difficultés au cours de la mise au point de ce produit car la texture recherchée n'était obtenue qu'avec l'ajout d'additifs ayant pour conséquence l'altération du goût de fruit sec. La Demanderesse est finalement parvenue à la mise au point d'un produit présentant un goût prononcé de fruit sec et ayant une texture identique à celle du chocolat en contrôlant la teneur en matière grasse des fruits secs utilisés.

La présente invention est définie par les revendications. La présente invention se rapporte à un produit alimentaire sucré à base de fruit sec consistant en :
- entre 25 et 45% en poids de fruit sec représentant un apport total en matière grasse provenant dudit fruit sec représentant au plus 25 % en poids par rapport au poids total dudit produit alimentaire ; de préférence, ledit fruit sec a une teneur en matière grasse inférieure ou égale à 65%, de préférence 40%, encore préférentiellement 35%, en poids par rapport au poids total de fruit sec ; ledit fruit sec étant choisi parmi les graines ou les fruits à coques;
- entre 25 et 45% en poids de saccharose ou autre matière sucrante anhydre, c'est-à-dire comprenant au plus 6% d'eau en poids par rapport au poids total dudit saccharose ou de ladite matière sucrante ; à titre d'exemple, cette autre matière sucrante peut être du maltitol anhydre ;
- entre 20 et 40% en poids de beurre de cacao ou toute autre matière grasse végétale solide à température ambiante (entre 18 et 25°C) utilisée en substitution partielle ou totale du beurre de cacao, par exemple, du beurre d'illipé ou de karité ;
- optionnellement, un émulsifiant en une teneur inférieure ou égale à 1%, en poids ; ledit produit alimentaire sucré ayant une granulométrie inférieure ou égale à 50 micromètres. L'homme du métier saura choisir l'émulsifiant alimentaire le plus adapté aux matières premières utilisées ; il peut s'agir par exemple de lécithine, de polyricinoléate de polyglycérol E476, de mono et/ou di-glycérides d'acides gras E471,... de préférence, l'émulsifiant est de la lécithine.

Le produit alimentaire sucré a une granulométrie inférieure ou égale à 50 µm, de préférence entre 15 et 25 µm.

Sauf indication contraire, les teneurs qui précèdent sont exprimées en poids par rapport au poids total du produit alimentaire sucré à base de fruits sec.

On entend par fruit sec tout fruit séché, graine ou fruit à coques, notamment amande, noisette, noix, noix de cajou, noix de pécan, pignon de pin, pistache, sésame, graines de courge, graines de tournesol, pavot, noix du Brésil, noix de Macadamia, noix du Queensland, noix de Nangail, châtaigne, ou encore des cacahouètes..., seul ou en mélange ; il s'agit de fruits secs à coque, en particulier, noisette ou amande. L'homme du métier saura ajuster la teneur en matière grasse du fruit sec considéré afin de se conformer aux spécificités du produit fini. En particulier, si cela s'avère nécessaire, le fruit sec peut être déshuilé selon les techniques classiques à la disposition de l'homme du métier, afin de réduire sa teneur en matière grasse à au plus 65%, de préférence au plus 40% et encore préférentiellement au plus 35% en poids par rapport au poids total de fruit sec.

La préparation du produit selon l'invention peut être réalisée selon les techniques classiques mises en œuvre lors de la préparation de produits chocolatés ; il est donc à la portée de l'homme du métier, sur la base de ses connaissances générales, de fabriquer le produit selon l'invention. C'est d'ailleurs un avantage significatif du produit selon l'invention de pouvoir être préparé à l'échelle industrielle en employant les machines de lignes de production de chocolat.

Le produit selon l'invention peut, par exemple, être préparé selon un procédé de fabrication comprenant les étapes suivantes :
a) mélange et pétrissage des ingrédients (sucre ou autre matière sucrante, fruit sec, beurre de cacao ou substitut de beurre de cacao et émulsifiant) ;
b) broyage du mélange d'ingrédients ; cette étape conduit à la granulométrie du produit fini souhaitée ;
c) mélange à une température supérieure ou égale à 40°C pendant au moins 2 heures ;
d) optionnellement, tempérage ; cette étape est recommandée lorsque la matière grasse utilisée est majoritairement composée de beurre de cacao ; il s'agit d'une étape au cours de laquelle le refroidissement du produit est initié afin que la matière grasse cristallise sous une forme stable. L'objectif est d'obtenir un produit fini qui présente les meilleures caractéristiques dans le temps (stabilité).

Les étapes de broyage b) et de mélange avec chauffage c) peuvent être réalisées successivement ; dans ce cas, le broyage b) précède le mélange avec chauffage c). Cette étape c) peut alors être réalisée pendant une durée plus courte, par exemple comprise entre 5 et 10 heures ; alternativement et en fonction du procédé retenu, ces deux étapes peuvent être conduites simultanément.

Après sa fabrication, le produit est généralement moulé.

La fabrication du produit selon l'invention peut être réalisée avec des fruits secs entiers ou préalablement broyés.

Lorsque le broyage et le mélange avec chauffage c) sont réalisés successivement, il est recommandé, pour l'obtention d'un produit fini ayant les propriétés rhéologiques souhaitées, d'utiliser comme ingrédient de départ un fruit sec sous forme de poudre d'une granulométrie fine, c'est-à-dire une poudre ayant une granulométrie inférieure à 315 µm pour 90% de la masse en début de procédé de fabrication.

L'étape de broyage mise en œuvre au cours du procédé de fabrication a pour conséquence de diminuer significativement cette granulométrie afin d'obtenir un produit fini ayant une granulométrie inférieure ou égale à 50 µm, de préférence comprise entre 15 et 25 µm.

Comme indiqué précédemment, le produit selon l'invention possède des propriétés physiques très proches de celles du chocolat ; ces propriétés se caractérisent par une plage de températures de fusion de la matière grasse comprise entre 20 et 40°C et sont telles qu'il est totalement fondu à 40°C ; par une fluidité (viscosité et limite d'écoulement) tout à fait comparable à celle du chocolat noir ou du chocolat au lait de couverture ; et par un produit solide à température ambiante (18-25°C).

Ces propriétés sont telles que le produit est croquant puis fondant en bouche ; il a un goût intense de fruit sec.

Le produit selon l'invention présente l'avantage de pouvoir être utilisé dans toutes les applications classiques du chocolat ; en particulier, le produit selon l'invention peut être utilisé comme couche d'enrobage de confiserie ou encore mis en forme par moulage. Bien qu'il représente une alternative à l'utilisation du chocolat, il ne nécessite pas l'investissement de matériels particuliers, notamment de lignes de fabrication industrielles, puisque ceux existant pour le chocolat conviennent.

Le produit alimentaire, selon l'invention, peut être utilisé pour des applications de type chocolatières, pâtissières, en biscuiterie ou encore en glacerie :
Parmi les applications chocolatières, on peut citer :
   - l'enrobage de bonbons ou de bouchées ;
   - la réalisation de moulages de type moulage de Pâques (Poule, Œuf, ...) ou autre moulage (Cabosses, petits personnages, ...) ;
   - la réalisation d'intérieurs de bonbons de chocolat de type ganache cadrée et chablonnée ;
   - le moulage de tablettes, de carrés ou toute autre forme moulable.
Parmi les applications pâtissières, on peut citer la préparation de :
   - crémeux ;
   - ganaches montées ;
   - mousses ;
   - sauce ;
   - nappage ;
   - décors ;
   - ganache pâtissière ;
   - boisson ;
et parmi les applications en glacerie, on peut citer la préparation de :
   - glaces ;
   - sorbets ;
   - crèmes glacées.

### Exemple 1 - préparation d'un produit alimentaire selon l'invention

Cet exemple vise à décrire la préparation d'un produit selon l'invention.

La recette mise en œuvre est une recette formulée à partir des 3 ingrédients suivants :
→ Sucre blanc cristallisé
→ Poudre d'amandes comprenant au maximum 45% de matière grasse en poids par rapport au poids total d'amandes
→ Beurre de cacao désodorisé

La mise en œuvre de chacun des ingrédients se fait dans les proportions suivantes :

| Ingrédient | % en poids par rapport au poids total |
|---|---|
| Poudre d'amande | 26% |
| Sucre blanc | 40% |
| Beurre de cacao désodorisé | 34% |

La mise en œuvre se fait, dans cet exemple, sur une ligne de fabrication de chocolat conventionnelle de type pétrissage/Prébroyage/Broyage/Mélange.

Les étapes clés de la préparation de ce produit sont présentées ci-dessous :

| |
|---|
| Mélange des MP / Pétrissage |
| Pré-broyage / Broyage |
| Mélange |
| Tempérage |
| Moulage |
| Conditionnement |

Pour être moulé, on opère sur le produit un tempérage conduit aux températures suivantes :
T° de cuve : 50°C
T° basse : 26°C
T° de sortie : 28°C

### Exemple 2 - caractérisation rhéologique d'un produit alimentaire selon l'invention

Ce second exemple vise à décrire le procédé de caractérisation de la rhéologie sur un produit issu de l'invention, qui sera, dans ce cas précis, un produit formulé à base de noisettes entières et qui présente la formule suivante et préparé selon le procédé décrit à l'exemple 1 :

### Formulation du produit :

| | de chaque ingrédient |
|---|---|
| Noisettes entières | 27% |
| Sucre blanc | 39% |
| Beurre de cacao désodorisé | 34% |

### Principe :

Le comportement rhéologique est suivi grâce à un rhéomètre rotatif ROTOVISCO 1 à vitesse imposée.

### Matériel :

Instrument de mesure ROTOVISCO RV1 de chez Thermo Fischer;
Bain thermostaté à 40°C ;
Logiciel d'application et de traitement des mesures RHEOWIN - Modèle CASSON ;
Systèmes de géométries coaxiaux DIN Z 20 (rotor)

### Résultats :

Limite d'écoulement : 12 Pa +/- 1
Viscosité : 2 Pa.s +/- 0.2

Ces valeurs correspondent aux propriétés rhéologiques de chocolats de couverture ; les résultats de l'exemple 2 montrent ainsi que le produit selon l'invention présente des propriétés physiques d'écoulement identiques à celle du chocolat.

### Exemple 3 - préparation d'un produit alimentaire (qui ne fait pas partie de l' invention)

Cet exemple vise à décrire la préparation d'un produit qui ne fait pas partie de l'invention.

La recette mise en œuvre est une recette formulée à partir des 3 ingrédients suivants :
- Sucre cassonade ;
- Cubes de pomme déshydratés comprenant au plus 5% d'eau en poids par rapport au poids total de cubes de pomme et
- Beurre de cacao désodorisé ;
dans les proportions suivantes :

| Ingrédient | % en poids par rapport au poids total |
|---|---|
| Cubes de pomme déshydratés | 24% |
| Sucre cassonade | 42% |
| Beurre de cacao désodorisé | 34% |

La mise en œuvre se fait, dans cet exemple, sur une ligne de fabrication de chocolat de type universelle.

Pour être moulé, on opère sur le produit un tempérage conduit aux températures suivantes :
T° de cuve : 50°C
T° basse : 26°C
T° de sortie : 28°C.

## Revendications

1. Produit alimentaire sucré à base de fruit sec consistant en :
- entre 25 et 45% en poids de fruit sec représentant un apport total en matière grasse provenant dudit fruit sec représentant au plus 25% en poids par rapport au poids total dudit produit alimentaire ; ledit fruit sec étant choisi parmi les graines ou les fruits à coques
- entre 25 et 45% en poids de saccharose ou autre matière sucrante anhydre ;
- entre 20 et 40% en poids de beurre de cacao ou toute autre matière grasse végétale solide à température ambiante utilisée en substitution partielle ou totale du beurre de cacao ;
- optionnellement, un émulsifiant en une teneur inférieure ou égale à 1% ;
ledit produit alimentaire sucré ayant une granulométrie inférieure ou égale à 50 µm.

2. Produit alimentaire selon la revendication 1, **caractérisé en ce que** ledit fruit à coque ou ladite graine est choisi parmi l'amande, la noisette, la noix, la noix de cajou, la noix de pécan, le pignon de pin, la pistache, le sésame, les graines de courge, les graines de tournesol, le pavot, la noix du Brésil, la noix de Macadamia, la noix du Queensland, la noix de Nangail, la châtaigne, ou la cacahouète, seul ou en mélange.

3. Produit alimentaire selon l'une quelconque des revendications précédentes, **caractérisé par** une granulométrie comprise entre 15 et 25 µm.

4. Produit alimentaire selon l'une quelconque des revendications précédentes, **caractérisé en ce que** ledit fruit sec a une teneur en matière grasse inférieure ou égale à 65%.

5. Produit alimentaire selon l'une quelconque des revendications précédentes, **caractérisé en ce que** ledit émulsifiant est de la lécithine.

6. Procédé de fabrication du produit selon l'une quelconque des revendications 1 à 5 comprenant les étapes suivantes :
a) mélange et pétrissage dudit sucre ou autre matière sucrante, dudit fruit sec, dudit beurre de cacao ou substitut de beurre de cacao et dudit émulsifiant ;
b) broyage dudit mélange obtenu à l'étape a) ;
c) mélange à une température supérieure ou égale à 40°C pendant au moins 2 heures ;
d) optionnellement, tempérage.

7. Procédé selon la revendication 6, **caractérisé en ce que** les étapes b) de broyage et c) de mélange avec chauffage sont réalisées simultanément.

## Patentansprüche

1. Zuckerhaltiges Lebensmittelprodukt auf Trockenfruchtbasis, bestehend aus:
- zwischen 25 und 45 Gew.-% an Trockenfrucht, was einen Gesamtbeitrag an Fett aus der Trockenfrucht darstellt, der höchstens 25 Gew.-% in Bezug auf das Gesamtgewicht des Lebensmittelprodukts darstellt; wobei die Trockenfrucht aus den Kernen oder den Schalenfrüchten ausgewählt wird
- zwischen 25 und 45 Gew.-% an Saccharose oder einem anderen wasserfreien Süßstoff;
- zwischen 20 und 40 Gew.-% an Kakaobutter oder allen anderen auf Umgebungstemperatur festen Pflanzenfetten, die als teilweiser oder vollständiger Ersatz der Kakaobutter verwendet werden;
- optional einem Emulgator in einem Gehalt von kleiner oder gleich 1 %;
wobei das zuckerhaltige Lebensmittelprodukt eine Korngröße kleiner oder gleich 50 µm aufweist.

2. Lebensmittelprodukt nach Anspruch 1, **dadurch gekennzeichnet, dass** die Schalenfrucht oder der Kern aus der Mandel, der Haselnuss, der Nuss, der Cashewnuss, der Pecannuss, dem Pinienkern, der Pistazie, dem Sesam, dem Kürbiskern, den Sonnenblumenkernen, dem Mohn, der Paranuss, der Macadamianuss, der Queenslandnuss, der Nangailnuss, der Kastanie, oder der Erdnuss, alleine oder als Mischung, ausgewählt wird.

3. Lebensmittelprodukt nach einem der vorstehenden Ansprüche, **gekennzeichnet durch** eine Korngröße, die zwischen 15 und 25 µm enthalten ist.

4. Lebensmittelprodukt nach einem der vorstehenden Ansprüche, **dadurch gekennzeichnet, dass** die Trockenfrucht einen Fettgehalt von kleiner oder gleich 65% aufweist.

5. Lebensmittelprodukt nach einem der vorstehenden Ansprüche, **dadurch gekennzeichnet, dass** der Emulgator Lecithin ist.

6. Verfahren zur Herstellung des Produkts nach einem der Ansprüche 1 bis 5, umfassend die folgenden Schritte:
a) Mischen und Kneten des Zuckers oder eines anderen Süßstoffes der Trockenfrucht, der Kakaobutter oder des Substituts der Kakaobutter und des Emulgators;
b) Zerkleinern der in Schritt a) erhaltenen Mischung;
c) Mischen auf einer Temperatur größer oder gleich 40°C mindestens 2 Stunden lang;
d) optional Temperieren.

7. Verfahren nach Anspruch 6, **dadurch gekennzeichnet, dass** die Schritte b) des Zerkleinerns und c) des Mischens mit Erwärmen zeitgleich durchgeführt werden.

## Claims

1. Sweet food product made of dried fruit consisting of:
- between 25 and 45% by weight of dried fruit representing a total fat contribution coming from said dried fruit representing at most 25% by weight with respect to the total weight of said food product; said dried fruit being selected from seeds or nuts;
- between 25 and 45% by weight of saccharose or other anhydrous sweetening matter;
- between 20 and 40% by weight of cocoa butter or any other solid vegetable fat at ambient temperature used in partial or total substitution of the cocoa butter;
- optionally, by emulsifier in a content less than or equal to 1%; said sweet food product having a grain size less than or equal to 50µm.

2. Food product according to claim 1, **characterised in that** said nut or said seed is selected from almond, hazelnut, walnut, cashew, pecan, pine nut, pistachio, sesame, pumpkin seeds, sunflower seeds, poppy, Brazil nut, Macadamia nut, Queensland nut, Nangai nut, chestnut, peanut, individually or in a mixture.

3. Food product according to any one of the preceding claims, **characterised by** a grain size of between 15 and 25µm.

4. Food product according to any one of the preceding claims, **characterised in that** said dried fruit has a fat content less than or equal to 65%.

5. Food product according to any one of the preceding claims, **characterised in that** said emulsifier is lecithin.

6. Method for producing the product according to any one of claims 1 to 5 comprising the following steps:
a) mixing and kneading said sugar or other sweet matter, said dried fruit, said cocoa butter or cocoa butter substitute and said emulsifier;
b) grinding said mixture obtained in step a);
c) mixing at a temperature greater than or equal to 40°C for at least 2 hours;
d) optionally, tempering.

7. Method according to claim 6, **characterised in that** the steps b) of grinding and c) mixing with heating are carried out simultaneously.
